# DEMANDE DE BREVET EUROPEEN

(11) **EP 4 246 877 A1**
(43) Date de publication de la demande: **20.09.2023**
(21) Numéro de dépôt: 23161394.4
(22) Date de dépôt: 13.03.2023
(51) Int. Cl.: H04L 9/08

(54) **GENERATION SECURISEE DE CLEFS D'APPAIRAGE**

(30) Priorité: 18.03.2022 FR 2202421
(71) Demandeur: STMICROELECTRONICS SA, 92120 Montrouge (FR); STMicroelectronics (Grand Ouest) SAS, 72100 Le Mans (FR)
(72) Inventeur: BINIGUER, Thierry, 72100 LE MANS (FR); BARATTE, Benjamin, 92120 MONTROUGE (FR)
(74) Mandataire: Cabinet Beaumont

(57) **Abrégé**

La présente description concerne un procédé comprenant :
- la réception, par un premier circuit et en provenance d'un deuxième circuit, d'un premier identificateur (SAFEID) du deuxième circuit ;
- la génération, et le stockage dans une mémoire, d'au moins une clef (PAIRING KEY) par le premier circuit, sur la base : du premier identificateur ; d'un deuxième identificateur (ID) du premier circuit ; et d'une première clef (DHUK) ;
- la transmission par le premier circuit de ladite au moins une clef au deuxième circuit ;
- la suppression de la mémoire de ladite au moins une clef dans le premier circuit ;
- une nouvelle génération de ladite au moins une clef par le premier circuit en réponse à une demande de communication avec le deuxième circuit ; et
- l'exécution, par le premier circuit, d'une ou plusieurs opérations cryptographiques, sur la base de ladite moins une clef.

## Description

### Domaine technique

La présente description concerne de façon générale la génération et la gestion de clefs d'appairage entre deux composants électroniques.

### Technique antérieure

L'appairage entre deux éléments électroniques d'un dispositif électronique est réalisé à l'aide de clefs d'appairage. Les clefs d'appairage sont généralement générées lors de la fabrication du dispositif, puis injectées et stockées de manière sécurisée dans le dispositif.

Cependant, il existe un problème technique pour garder les clefs d'appairage secrètes durant la vie du dispositif.

### Résumé de l'invention

Il existe un besoin récurrent d'améliorer la sécurité de la gestion de telles clefs d'appairage.

Un mode de réalisation prévoit un procédé comprenant :
- la réception, par un premier circuit d'un dispositif et en provenance d'un deuxième circuit, d'un premier identificateur du deuxième circuit ;
- la génération, et le stockage dans une mémoire du dispositif, d'au moins une clef par le premier circuit, sur la base : du premier identificateur ; d'un deuxième identificateur du premier circuit ; et d'une première clef ;
- la transmission par le premier circuit de ladite au moins une clef au deuxième circuit ;
- la suppression de la mémoire de ladite au moins une clef dans le premier circuit ;
- une nouvelle génération de ladite au moins une clef par le premier circuit en réponse à une demande de communication avec le deuxième circuit ; et
- l'exécution, par le premier circuit, d'une ou plusieurs opérations cryptographiques, sur la base de ladite moins une clef.

Selon un mode de réalisation, la génération de ladite au moins une clef comprend :
- la génération, par le premier circuit, d'une deuxième clef, sur la base de la première clef et du premier identificateur ; et
- la génération, par le premier circuit, de ladite au moins une clef, sur la base de la deuxième clef et d'une première valeur de donnée.

Selon un mode de réalisation, la génération de la deuxième clef est effectuée par un premier processeur cryptographique du premier circuit et la génération de ladite au moins une clef est effectuée par un deuxième processeur cryptographique du premier circuit.

Selon un mode de réalisation, la valeur de la deuxième clef est transmise par le premier processeur cryptographique au deuxième processeur cryptographique par l'intermédiaire d'un bus dédié reliant ensemble les premier et deuxième processeurs cryptographiques.

Selon un mode de réalisation, la deuxième clef est une clef dépendante du matériel du premier circuit.

Selon un mode de réalisation, la deuxième clef est une clef dérivée d'une troisième clef, la troisième clef étant une clef dépendante du matériel du premier circuit.

Selon un mode de réalisation, le procédé ci-dessus comprend en outre la génération de la première valeur de donnée, par le premier circuit, sur la base du premier identificateur et du deuxième identificateur et d'une valeur d'index.

Selon un mode de réalisation, la génération de la première valeur de donnée est réalisée par application d'un algorithme de hachage sur le premier identificateur et sur le deuxième identificateur et sur la valeur d'index.

Selon un mode de réalisation, ladite au moins une clef comprend une clef symétrique.

Un mode de réalisation prévoit un dispositif électronique comprenant un premier circuit configuré pour :
- recevoir, en provenance d'un deuxième circuit, un premier identificateur du deuxième circuit ;
- générer et stocker, dans une mémoire du dispositif, au moins une clef, la génération étant effectuée sur la base : du premier identificateur ; d'un deuxième identificateur du premier circuit ; et d'une première clef ;
- transmettre ladite au moins une clef au deuxième circuit ;
- supprimer de la mémoire ladite au moins une clef ;
- générer à nouveau ladite au moins une clef par le premier circuit en réponse d'une demande de communication avec le deuxième circuit ; et
- exécuter une ou plusieurs opérations cryptographiques, sur la base de ladite au moins une clef.

Selon un mode de réalisation, le dispositif ci-dessus comprend :
- un premier processeur cryptographique configuré pour générer une deuxième clef, sur la base de la première clef et du premier identificateur ; et
- un deuxième processeur cryptographique configuré pour générer ladite au moins une clef, sur la base de la deuxième clef et d'une première valeur de donnée,
le premier et le deuxième processeurs cryptographiques étant reliés par un bus dédié.

Un mode de réalisation prévoit un système comprenant :
- le dispositif électronique ci-dessus ; et
- le deuxième circuit, les premier et deuxième circuits étant configurés pour la mise en oeuvre du procédé ci-dessus.

Selon un mode de réalisation, le deuxième circuit comprend une mémoire programmable une seule fois configurée pour stocker l'au moins une clef générée par le premier circuit.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon schématique et sous forme de blocs, un dispositif électronique selon un mode de réalisation de la présente description ;
la figure 2 représente, de façon schématique et sous forme de blocs, une unité de traitement configurée pour la génération de clefs d'appairage, selon un mode de réalisation de la présente description ;
la figure 3 illustre un procédé de génération de clefs d'appairage selon un mode de réalisation de la présente description ; et
la figure 4 est un organigramme d'un procédé de génération de clefs d'appairage selon un mode de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la conception de dispositifs de traitement est bien connue de la personne du métier et certains éléments n'ont pas été détaillés dans la description qui suit.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

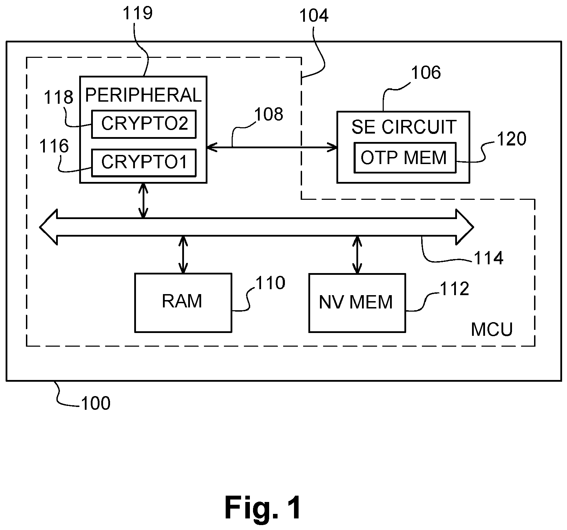

La figure 1 représente, de façon schématique et sous forme de blocs, un dispositif électronique 100 comprenant une unité de traitement 104 (MCU) (en anglais « Microcontroller Unit ») selon un mode de réalisation de la présente description.

Le dispositif électronique 100 est par exemple une carte électronique telle qu'une carte à microcircuits, un matériel à usage informatique, un circuit à microprocesseur, etc.

Le dispositif 100 comprend en outre un circuit sécurisé 106 (SE CIRCUIT) relié à l'unité de traitement 104 par l'intermédiaire d'un bus 108. Le bus 108 est par exemple un bus dédié reliant exclusivement l'unité de traitement 104 et le circuit sécurisé 106. Le bus 108 est par exemple un bus de type I2C (de l'anglais « Inter-Integrated Circuit ») .A titre d'exemple, l'unité de traitement 104 et le circuit sécurisé 106 sont implémentés sur deux circuits intégrés différents..

A titre d'exemple, l'unité de traitement comprend une mémoire volatile 110 (RAM) ainsi qu'une mémoire non volatile 112 (NV MEM). La mémoire volatile 110 est, par exemple, une mémoire volatile à accès aléatoire (de l'anglais « Random Access Memory »). La mémoire non volatile 112 est, par exemple, une mémoire de type FLASH. Les mémoires 110 et 112 sont par exemple reliées par l'intermédiaire d'un bus 114.

L'unité de traitement 104 est par exemple configurée pour être appairée avec le circuit sécurisé 106. L'appairage entre l'unité de traitement 104 et le circuit sécurisé 106 s'effectue à l'aide de clefs d'appairage. L'appairage de l'unité de traitement 104 avec le circuit sécurisé 106 implique par exemple le partage d'un secret commun entre ces deux circuits permettant des communications sécurisées entre eux. A titre d'exemple, une ou plusieurs clefs d'appairage, telles que par exemple une ou plusieurs clefs symétriques, et/ou une paire de clefs privée et publique, sont générées, par exemple par l'unité de traitement 104, et sont transmises vers le circuit sécurisé 106. La ou les clefs d'appairage sont par exemple générées par des processeurs cryptographiques 116 et 118 (CRYPTO1, CRYPTO2) compris dans un circuit périphérique 119 (PERIPHERAL) de l'unité de traitement 104. Les processeurs cryptographiques 116 et 118 sont par exemple reliés par un bus dédié (non illustré) à l'intérieur de l'unité de traitement 104. Le circuit périphérique 119 est par exemple reliés aux mémoires 110 et 112 par l'intermédiaire du bus 114.

Les clefs sont par exemple utilisées à chaque demande de communication entre l'unité de traitement 104 et le circuit sécurisé 106, par exemple par le biais d'un chiffrement et déchiffrement asymétrique. Dans un autre exemple, l'appairage et la communication entre l'unité de traitement 104 et le circuit sécurisé 106 sont réalisées par le biais d'une clef de chiffrement et déchiffrement symétrique.

La ou les clefs d'appairage devraient donc être accessibles tout du long de la vie du dispositif 100. Le circuit sécurisé 106 comporte par exemple des mécanismes de protection rendant difficile une attaque ciblant la ou les clefs d'appairage et/ou d'autres données stockées à l'intérieur de ce circuit. Cependant, le stockage de la ou les clefs d'appairage dans la mémoire non volatile 112 est couteux en espace et risqué en termes de sécurité. En effet, un attaquant de l'unité de traitement 104 pourrait obtenir des informations sur la ou les clefs, ce qui compromettrait la sécurité non seulement de l'unité de traitement 104, mais également du circuit sécurisé 106, et plus généralement du dispositif 100.

Dans les modes de réalisation décrits, l'unité de traitement 104, et plus particulièrement les processeurs cryptographiques 116 et 118, sont configurés pour générer la ou les clefs d'appairage à chaque demande de communication avec le circuit sécurisé 106 ou à chaque session d'utilisation du dispositif 100. Ainsi, dans les modes de réalisation décrits, la ou les clefs d'appairage ne sont ni stockées dans les mémoires 110 et/ou 112 ni dans une quelconque mémoire interne de l'unité de traitement 104, lorsque qu'aucune communication entre l'unité 104 et le circuit de sécurité 106 n'est en cours. L'unité de traitement 104 est alors configurée pour générer la ou les clefs d'appairage une première fois, afin d'effectuer l'appairage avec le circuit sécurisé 106, puis pour supprimer la ou les clefs générées, jusqu'à leur nouvelle génération au moment d'une nouvelle communication avec le circuit sécurisé 106.

A titre d'exemple, le circuit sécurisé 106 comprend une mémoire 120 (OTP MEM), la mémoire 120 étant par exemple une mémoire programmable une seule fois. La mémoire 120 est par exemple configurée pour stocker la ou les clefs d'appairage transmises par l'unité de traitement 104, suite à leur première génération.

Bien que la figure 1 illustre un appairage entre une unité de traitement et un circuit sécurisé, dans d'autres modes de réalisation, l'appairage pourrait être effectué entre deux dispositifs quelconques, sécurisés ou non.

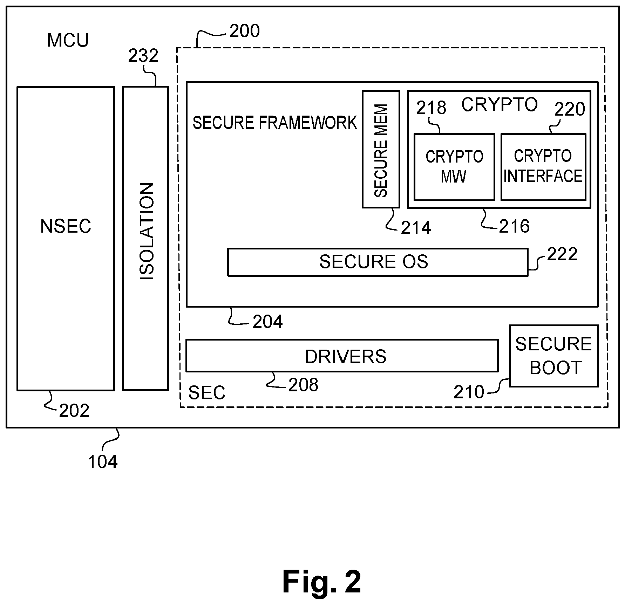

La figure 2 représente, de façon très schématique et sous forme de blocs, l'unité de traitement 104 configurée pour la génération de la ou des clefs d'appairage. La figure 2 illustre en particulier des fonctions logicielles mises en oeuvre par l'unité de traitement 104. Des logiciels configurés pour mettre en oeuvre ces fonctions sont par exemple stockés dans la mémoire non volatile 112 et/ou chargés dans la mémoire volatile 110.

L'unité de traitement 104 comprend par exemple une zone sécurisée 200 (SEC) et une zone non sécurisée 202 (NSEC).

La zone 200 comprend par exemple une zone 204 (SECURE FRAMEWORK) comprenant des micrologiciels de confiance intermédiaire pour assurer des liaisons avec certains circuits du dispositif électronique 100.

La zone 200 comprend en outre des logiciels pilotes 208 (DRIVERS) ainsi qu'un code de démarrage 210 (SECURE BOOT).

La zone 204 comprend par exemple un ou plusieurs logiciels configurés pour gérer des zones mémoire de confiance et/ou sécurisées de l'unité de traitement 104. Par exemple, la zone 204 comprend un module de logiciel 214 (SECURED MEM) configuré pour gérer des zones mémoire sécurisées.

La zone 204 comprend en outre un module cryptographique 216 (CRYPTO) configuré pour assurer une liaison avec les processeurs cryptographiques 116 et 118 du circuit de traitement 104 et avec le circuit sécurisé 106. Le module cryptographique 216 comprend par exemple un logiciel 218 (CRYPTO MW) configuré pour piloter les processeurs cryptographiques 116 et 118, et une interface 220 (CRYPTO INTERFACE) configurée pour assurer des communications avec le circuit sécurisé 106. L'interface 220 est configurée pour, par exemple, recevoir des informations, telles que par exemple des identificateurs, transmises par le circuit sécurisé 106. L'interface 220 est par exemple en outre configurée pour transmettre, au circuit sécurisé 106, la ou les clefs générées par les circuits cryptographiques 116 et 118.

La zone 204 comprend en outre un module de logiciel 222 (SECURE OS) s'assurant du séquencement des unités 214 et 216.

L'unité de traitement 104 comprend en outre une interface d'isolation 232 séparant la zone non-sécurisée 202 de la zone sécurisée 200.

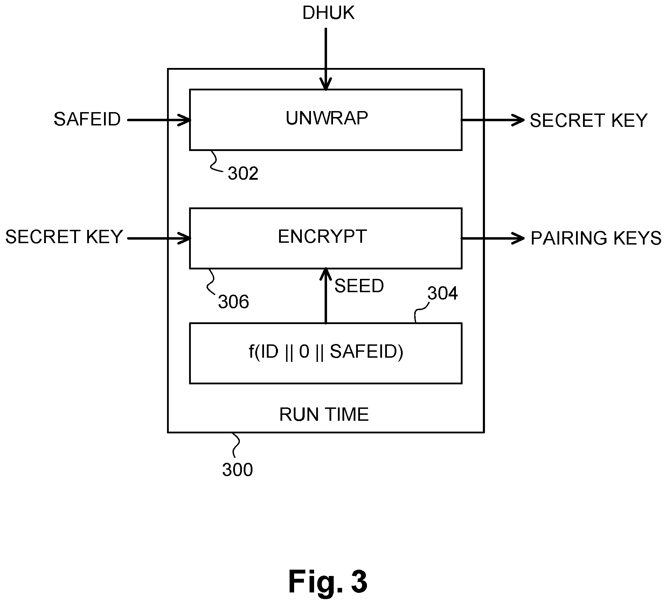

La figure 3 illustre un procédé 300 de génération d'une ou de plusieurs clefs d'appairage par l'unité de traitement 104 selon un mode de réalisation de la présente description.

Le procédé de la figure 3 est par exemple réalisé chaque fois qu'un appairage est à mettre en place entre l'unité de traitement 104 et le circuit sécurisé 106. A titre d'exemple, la génération de l'une ou des clefs d'appairage est effectuée en réponse à une demande de communication entre l'unité de traitement 104 et le circuit sécurisé 106 lors du fonctionnement (RUN TIME) de l'unité de traitement 104.

Pour générer la ou les clefs d'appairage, une clef matérielle DHUK est par exemple fournie au processeur cryptographique 116. La clef DHUK est une valeur unique et propre au matériel réalisant l'unité de traitement 104 dans le contexte de la zone sécurisée 200. En particulier, dans un lot de plusieurs centaines, voire milliers, d'unités de traitement 104, chaque unité de traitement est par exemple associée avec une clef DHUK correspondante, qui lui est unique par rapport aux clefs DHUK associées aux autres unités de traitement 104 du lot. Dans certains cas, la clef DHUK est une clef dérivée d'une autre clef matérielle ROOT HUK, par exemple stockées dans une zone mémoire sécurisée, par exemple gérée par le logiciel 214. La clef ROOT HUK est par exemple unique et propre au dispositif 100, par conséquent la clef dérivée DHUK est aussi unique et propre au dispositif 100. Dans certains cas, la clef DHUK et/ou la clef ROOT HUK, sont générées en fonction d'une ou plusieurs caractéristiques uniques du matériel de l'unité de traitement 104. Par exemple, la clef DHUK et/ou la clef ROOT HUK sont générées par une fonction non réplicable physiquement (en anglais « physically unclonable function », ou « PUF »).

Le processeur cryptographique 116 est en outre configuré pour recevoir un identificateur SAFEID, transmis par le circuit sécurisé 106, par exemple par l'intermédiaire du bus 108.

A titre d'exemple, le processeur cryptographique 116 effectue une opération de désencapsulage 302 (UNWRAP), correspondant par exemple à une opération de décodage de l'identificateur SAFEID utilisant la clef DHUK, afin de générer une clef secrète SECRET KEY. L'identificateur SAFEID est donc traité par le processeur cryptographique 116 comme s'il était une donnée chiffrée par la clef DHUK, bien que ce ne soit pas le cas. En effet, la clef SECRET KEY générée ne correspond pas à un quelconque décodage de l'identificateur SAFEID, l'identificateur SAFEID n'était tout simplement pas une donnée chiffrée. D'autres opérations de génération de la clef SECRET KEY sont bien sûr envisageables, comme par exemple l'encodage de l'identificateur SAFEID en utilisant la clef DHUK. La clef SECRET KEY étant obtenue à partir de la clef dérivée DHUK, elle est unique et propre au dispositif 100.

A titre d'exemple, l'unité de traitement 104 génère en sus une valeur de donnée SEED à partir de l'identificateur SAFEID, d'un identificateur ID de l'unité de traitement 104 et d'une valeur d'index (0). A titre d'exemple, l'identificateur ID est stocké dans la mémoire non volatile 112 de l'unité de traitement 104. A titre d'exemple, la valeur de donnée SEED est générée par application d'une fonction de hachage 304 (f(ID∥0∥SAFEID)) sur les identificateurs SAFEID et ID et sur la valeur d'index.

La valeur d'index permet par exemple la génération de plusieurs clefs différentes sur la base d'une même clef secrète et des mêmes identificateurs SAFEID et ID. Cela est par exemple utile afin d'ajouter de l'entropie supplémentaire au résultat final de l'opération en intégrant une tierce source à l'appairage, telle qu'un numéro de série, un numéro de production, un identifiant d'un centre de production etc. Dans un autre exemple, la génération de plusieurs clefs différentes sur la base d'une même clef secrète permet l'appairage de l'unité de traitement 104 avec plusieurs circuits sécurisés. Encore dans un autre exemple, la génération de plusieurs clefs différentes sur la base d'une même clef secrète permet l'adressage du résultat final vers plusieurs canaux de communication.

A titre d'exemple, la valeur de donnée SEED est générée en parallèle de la génération de la clef SECRET KEY, par un circuit de calcul (non illustré) de l'unité de traitement 104. Dans un autre exemple, la valeur de donnée SEED est générée par le processeur cryptographique 118, en parallèle de la génération de la clef SECRET KEY par le processeur cryptographique 116. Encore dans un autre exemple, la valeur de donnée SEED est générée par le processeur cryptographique 116 avant, en parallèle de ou suite à, la génération de la clef SECRET KEY.

La clef SECRET KEY est ensuite par exemple transmise, avec la valeur de donnée SEED, au processeur cryptographique 118. Dans certains cas, suite à la génération de la clef SECRET KEY lors de l'opération 302, cette dernière est directement utilisée dans l'opération 306, sans être stockée dans une quelconque mémoire de l'unité de traitement 104.

Le processeur cryptographique 118 génère alors une ou plusieurs clefs d'appairage PAIRING KEYS, par exemple par application d'une opération de chiffrement 306 (ENCRYPT) sur la clef SECRET KEY et sur la valeur de donnée SEED. A titre d'exemple, l'algorithme de chiffrement utilisé est de type AES, bien que l'utilisation d'autres algorithmes de chiffrement est possible, tels qu'un algorithme de type DES, un algorithme de chiffrement sur courbes elliptiques etc. Il est bien sur possible de générer la ou les clefs d'appairage en appliquant une opération de dérivation de clef n'impliquant pas d'opération de chiffrement.

A titre d'exemple, lors de la première génération de la ou des clefs d'appairage PAIRING KEYS, celles-ci sont transmises, par l'unité de traitement 104, au circuit sécurisé 106 par l'intermédiaire du bus 108. Les clefs sont alors par exemple stockées de manière définitive dans la mémoire 120. Cependant suite à cette génération, l'unité de traitement 104 supprime les clefs générées. Ainsi, le circuit sécurisé 106 est alors appairé définitivement à l'unité de traitement 104, mais l'unité de traitement 104 oublie cet appairage.

A titre d'exemple, lors de la transmission des clefs d'appairage au circuit sécurisé 106, suite à leur première génération, l'unité de traitement 104 programme une valeur de configuration indiquant que les clefs d'appairages ont déjà été transmises au circuit sécurisé 106, afin que les clefs d'appairage ne soient pas transmises à nouveau au circuit sécurisé 106 lors d'une prochaine génération de ces clefs. Dans un autre exemple, l'unité de traitement 104 interroge le circuit sécurisé 106 afin de déterminer si les clefs d'appairages sont par exemple déjà stockées dans la mémoire 120.

A titre d'exemple, la première génération des clefs d'appairage est effectuée en réponse à une demande d'appairage entre l'unité de traitement 104 et le circuit sécurisé 106. La demande d'appairage est par exemple faite lors de la fabrication du dispositif 100 et dans un environnement sécurisé.

A titre d'exemple, une nouvelle demande de communication avec le circuit sécurisé 106 est par exemple initiée par un logiciel exécuté par l'unité de traitement 104. L'unité de traitement 104 génère alors à nouveau la ou les clefs d'appairage afin d'être en mesure d'effectuer la communication. La ou les clefs d'appairage sont alors directement utilisées par l'unité de traitement 104. Dans ce but la ou les clefs PAIRING KEYS sont par exemple stockées de façon temporaire dans la mémoire 110 et sont supprimées suite à leur utilisation. La ou les clefs d'appairage ne sont alors par exemple pas transmises à nouveau au circuit sécurisé 106 car déjà stockées dans la mémoire 120 du circuit sécurisé 106.

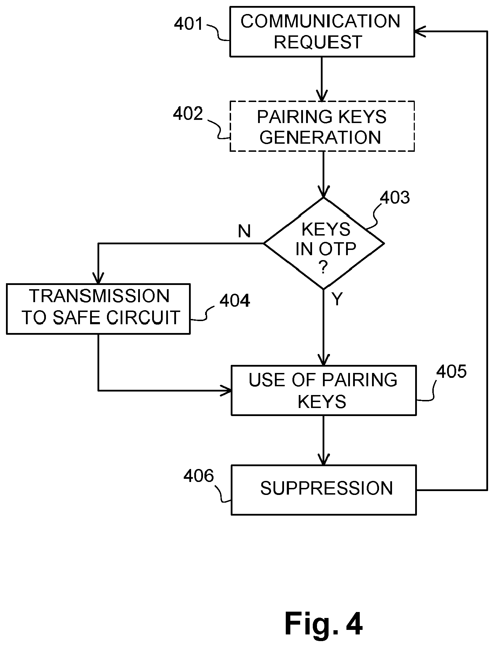

La figure 4 est un organigramme d'un procédé de génération de clefs d'appairage selon un mode de réalisation de la présente description.

Dans une étape 401 (COMMUNICATION REQUEST), une demande de communication ou d'appairage entre l'unité de traitement 104 et le circuit sécurisé 106 est initiée dans l'unité de traitement 104. A titre d'exemple, le circuit sécurisé est configuré pour réaliser une ou plusieurs fonctions cryptographiques, et une demande de communication intervient quand l'unité de traitement 104 a des données à transmettre au circuit sécurisé 106 pour encodage ou décodage. Le circuit sécurisé 106 est en outre configuré pour transmettre l'identificateur SAFEID à l'unité de traitement 104. A titre d'exemple, l'identificateur SAFEID est transmis au processeur cryptographique 116 de l'unité de traitement 104.

Dans une étape 402 (PAIRING KEYS GENERATION), la ou les clefs d'appairage entre le circuit sécurisé 106 et l'unité de traitement 104 sont générées. La génération est effectuée par l'unité de traitement 104, et par exemple selon le procédé décrit en relation avec la figure 3. Il est bien sûr possible de générer la ou les clefs d'appairage selon une méthode différente de celle décrite en relation avec la figure 3. La ou les clefs sont en outre par exemple stockées de manière temporaire dans une des mémoires 110, 112.

Dans une étape 403 (KEYS IN OTP ?), il est déterminé, si les clefs d'appairage sont déjà stockées dans la mémoire 120. Cela est par exemple le cas lorsque l'étape 401 est ultérieure à une demande d'appairage.

A titre d'exemple, la détermination de l'étape 403 s'effectue par vérification de l'état d'une valeur de configuration, par exemple stockée dans la mémoire non volatile 112. La valeur de configuration est par exemple programmée par l'unité de traitement 104 lors de la transmission de la ou des clefs d'appairage au circuit sécurisé 106.

S'il est déterminé que les clefs d'appairages ne sont pas encore stockées dans la mémoire 120 du circuit sécurisé 106 (branche N), le procédé continue dans une étape 404 (TRANSMISSION TO SAFE CIRCUIT). La ou les clefs générées dans l'étape 402 sont alors transmises, par exemple par l'intermédiaire de l'interface 220 du circuit cryptographique 216 et par l'intermédiaire du bus 108, au circuit sécurisé 106. Le circuit sécurisé 106 stocke alors la ou les clefs dans la mémoire 120. La mémoire 120 étant par exemple de type programmable une seule fois, le stockage de la ou des clefs d'appairage est alors définitif.

Suite à l'étape 404, ou s'il est déterminé dans l'étape 403 que la ou les clefs d'appairage sont déjà stockées dans la mémoire 120 (branche Y), le procédé continue dans une étape 405 (USE OF PAIRING KEYS). La ou les clefs d'appairage sont alors utilisées, par exemple pour procéder à l'appairage de l'unité de traitement 104 et du circuit de sécurisé 106, ou pour effectuer la communication demandée dans l'étape 401.

Suite à l'étape 405, la ou les clefs d'appairage sont supprimées de l'unité de traitement 104 dans une étape 406 (SUPPRESSION). L'étape 405 comprend en outre la suppression de la valeur SEED si celle-ci a été stockée au sein de l'unité de traitement 104. L'étape 405 comprend par exemple, en outre, la suppression, du sein de l'unité de traitement 104, de la valeur de l'identificateur SAFEID. Suite à l'étape 405, l'unité de traitement 104 est alors incapable de générer la ou les clefs d'appairage sans que le circuit sécurisé 106 ne lui fournisse la valeur de l'identificateur SAFEID. Le procédé reprend alors à l'étape 401, lorsqu'une nouvelle demande de communication entre l'unité de traitement 104 et le circuit sécurisé 106 est initiée.

Un avantage des modes de réalisation décrits est que, en regénérant les clefs d'appairage par l'unité de traitement à chaque demande, il n'y a pas besoin de les stocker dans l'unité de traitement lorsqu'aucune opération de communication entre l'unité et le circuit sécurisé n'est en cours.

Un autre avantage des modes de réalisation décrits est que l'utilisation d'une clef matérielle unique empêche, une fois que le circuit sécurisé a été appairé avec l'unité de traitement, la communication sécurisée entre le circuit sécurisé et un autre élément, appartenant par exemple à un autre dispositif.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, le choix du type des opérations cryptographiques mises en oeuvre pour la génération de la ou des clefs d'appairage par les circuits cryptographiques 116 et 118 est à la portée de la personne du métier.

Enfin, la mise en oeuvre pratique des modes de réalisation et variantes décrits est à la portée de la personne du métier à partir des indications fonctionnelles données ci-dessus, en particulier, pour ce qui est de l'implémentation logicielle de l'unité de traitement 104.

## Revendications

1. Procédé comprenant :
- la réception, par un premier circuit (104) d'un dispositif (100) et en provenance d'un deuxième circuit (106), d'un premier identificateur (SAFEID) du deuxième circuit ;
- la génération, et le stockage dans une mémoire (110) du dispositif, d'au moins une clef (PAIRING KEY) par le premier circuit, sur la base : du premier identificateur ; d'un deuxième identificateur (ID) du premier circuit ; et d'une première clef (DHUK) ;
- la transmission par le premier circuit de ladite au moins une clef au deuxième circuit ;
- la suppression de la mémoire de ladite au moins une clef dans le premier circuit ;
- une nouvelle génération de ladite au moins une clef par le premier circuit en réponse à une demande de communication avec le deuxième circuit ; et
- l'exécution, par le premier circuit, d'une ou plusieurs opérations cryptographiques, sur la base de ladite moins une clef.

2. Procédé selon la revendication 1, dans lequel le premier identificateur est stocké dans la mémoire du dispositif, le procédé comprenant en outre, suite à la transmission de l'au moins une clef (PAIRING KEY) au deuxième circuit (106), la suppression du premier identificateur (SAFEID) de la mémoire du dispositif, et dans lequel la nouvelle génération de l'au moins une clef est effectuée suite à une nouvelle réception, par le premier circuit (104), du premier identificateur en provenance du deuxième circuit.

3. Procédé selon la revendication 1 ou 2, dans lequel la génération de ladite au moins une clef (PAIRING KEY) comprend :
- la génération, par le premier circuit (104), d'une deuxième clef (SECRET KEY), sur la base de la première clef (DHUK) et du premier identificateur (SAFEID) ; et
- la génération, par le premier circuit, de ladite au moins une clef, sur la base de la deuxième clef et d'une première valeur de donnée (SEED).

4. Procédé selon la revendication 3, dans lequel la génération de la deuxième clef (SECRET KEY) est effectuée par un premier processeur cryptographique (116) du premier circuit (104) et dans lequel la génération de ladite au moins une clef (PAIRING KEYS) est effectuée par un deuxième processeur cryptographique (118) du premier circuit.

5. Procédé selon la revendication 4, dans lequel la valeur de la deuxième clef (SECRET KEY) est transmise par le premier processeur cryptographique (116) au deuxième processeur cryptographique (118) par l'intermédiaire d'un bus dédié reliant ensemble les premier et deuxième processeurs cryptographiques.

6. Procédé selon l'une quelconque des revendications 1 à 5, dans lequel la première clef (DHUK) est une clef dépendante du matériel du premier circuit (104).

7. Procédé selon l'une quelconque des revendications 1 à 5, dans lequel la première clef (DHUK) est une clef dérivée d'une troisième clef (ROOT HUK), la troisième clef étant une clef dépendante du matériel du premier circuit (104).

8. Procédé selon l'une quelconque des revendications 3 à 7, comprenant en outre la génération de la première valeur de donnée (SEED), par le premier circuit (104), sur la base du premier identificateur (SAFEID) et du deuxième identificateur (ID) et d'une valeur d'index.

9. Procédé selon la revendication 8, dans lequel la génération de la première valeur de donnée (SEED) est réalisée par application d'un algorithme de hachage sur le premier identificateur (SAFEID) et sur le deuxième identificateur (ID) et sur la valeur d'index.

10. Procédé selon l'une quelconque des revendications 1 à 9, dans lequel ladite au moins une clef (PAIRING KEYS) comprend une paire de clefs asymétriques.

11. Procédé selon l'une quelconque des revendications 1 à 10, dans lequel ladite au moins une clef (PAIRING KEY) comprend une clef symétrique.

12. Dispositif électronique (100) comprenant un premier circuit (104) configuré pour :
- recevoir, en provenance d'un deuxième circuit (106), un premier identificateur (SAFEID) du deuxième circuit ;
- générer et stocker, dans une mémoire (110) du dispositif, au moins une clef (PAIRING KEY), la génération étant effectuée sur la base : du premier identificateur ; d'un deuxième identificateur (ID) du premier circuit ; et d'une première clef (DHUK) ;
- transmettre ladite au moins une clef au deuxième circuit ;
- supprimer de la mémoire ladite au moins une clef ;
- générer à nouveau ladite au moins une clef par le premier circuit en réponse d'une demande de communication avec le deuxième circuit ; et
- exécuter une ou plusieurs opérations cryptographiques, sur la base de ladite au moins une clef.

13. Dispositif selon la revendication 12, dans lequel le premier circuit (104) est configuré pour stocker le premier identificateur dans la mémoire du dispositif, le dispositif étant en outre configuré pour :
- après avoir transmis l'au moins une clef au deuxième circuit (106), supprimer de la mémoire le premier identificateur (SAFEID) ; et
- générer à nouveau l'au moins une clef (PAIRING KEY) suite à la réception, en provenance du deuxième circuit (106), du premier identificateur.

14. Dispositif selon la revendication 12 ou 13 comprenant :
- un premier processeur cryptographique (116) configuré pour générer une deuxième clef (SECRET KEY), sur la base de la première clef (DHUK) et du premier identificateur (SAFEID) ; et
- un deuxième processeur cryptographique (118) configuré pour générer ladite au moins une clef (PAIRING KEYS), sur la base de la deuxième clef et d'une première valeur de donnée (SEED),
le premier et le deuxième processeurs cryptographiques étant reliés par un bus dédié.

15. Système comprenant :
- le dispositif électronique (100) selon l'une quelconque des revendications 12 à 14 ; et
- le deuxième circuit (106), les premier et deuxième circuits étant configurés pour la mise en oeuvre du procédé selon l'une quelconque des revendications 1 à 11.

16. Système selon la revendication 15, dans lequel le deuxième circuit (106) comprend une mémoire (120) programmable une seule fois configurée pour stocker l'au moins une clef (PAIRING KEY) générée par le premier circuit (104) .
